# EUROPEAN PATENT APPLICATION

(11) **EP 2 086 230 A1**
(43) Date of publication of application: **05.08.2009**
(21) Application number: 08101239.5
(22) Date of filing: 04.02.2008
(51) Int. Cl.: H04N 7/16

(54) **Smart card and method for using a smart card**

(71) Applicant: Irdeto Access B.V., 2132 HD Hoofddorp (NL)
(72) Inventor: Gerritsen, Robert Bernardus Wilhelmus, 5707 KS, Helmond (NL)
(74) Representative: van Looijengoed, Ferry Antoin Theodorus

(57) **Abstract**

The invention provides as smart card, a secured client with a smart card and a method for use in a smart card. The smart card is configured for counting ECMs associated to a particular portion of the content stream and storing loyalty points on the smart card. This enables e.g. counting of ECMs related to advertisements. Watching advertisements results in earning loyalty points that can be used to watch television programs for free.

## Description

### FIELD OF THE INVENTION

The present invention relates to a smart card for use in a secured client, a secured client for decrypting an encrypted content stream, a method for use in a smart card, and a computer program element adapted to carry out a method for use in a smartcard.

### BACKGROUND

Digital video broadcasting is a technique whereby streaming video and/or audio is packetized, encoded, possibly encrypted and broadcasted from a broadcasting server to a receiver device via a network. Additional services like e.g. an electronic service guide can be included in the broadcasted stream. Broadcasted services can be offered as free-to-air services or non-free-to-air services. Non-free-to-air services, and possibly other services, are encrypted by the broadcasting server and decrypted by a secured client, i.e. the receiving device for encrypted services. This content protection system is known as 'conditional access' or 'digital rights management'. Decryption keys needed for decrypting the services are transmitted from the broadcasting server to the secured client in a packet stream of encrypted entitlement control messages (ECMs). The encrypted ECMs contain control words which are used as decryption keys for the encrypted services. For decryption of the encrypted ECMs a smart card is provided containing a decryption key for decrypting the encrypted ECMs. The smart card's decryption of the ECM is needed to communicate the contained control word to the processor of the secured client for subsequent decryption of the service. As control words typically change every 10 seconds, the smart card must repeat the decryption process with the same frequency. For operation, the smart card is to be inserted into the secured client. Often a conditional access module equipped with a PCMCIA slot, wherein a PCMCIA smart card is to be inserted, is part of the secured client.

Entitled individual customers, e.g. customers having a subscription, receive a smart card to enable decryption of broadcasted services on a continuous per-service basis or on a more specific per-event basis. An example of a broadcasted service is a television service containing a variety of selectable programs. Advertisement data, which are also encrypted, are typically broadcast in-between programs. The customer experiences this as commercials being displayed in-between the television programs. A dedicated packet stream of encrypted ECMs is associated with the advertisement data.

A known mechanism to monitor whether a customer used a service or viewed a program is to have the smart card register that it decrypted associated ECMs.

It is known that a receiver device can be equipped with a second smart card slot for secondary cards. The second slot can be used for inserting a credit card for making on-line purchases. Loyalty points earned by such purchases can e.g. result in free viewing of pay-per-view events or reduction of subscription fees. Viewing specific content can also result in bonus points that are stored on the secondary card, which can subsequently be spent on purchases related to such content.

Business models are known that are based on marketing a service or program on a per-time basis. Hereto the total number of ECMs that have been processed by the smart card are counted and deducted from a built-in token purse after applying a cost-time conversion.

### SUMMARY OF THE INVENTION

It is an object of the invention to provide an improved smart card for storing loyalty points.

According to an aspect of the invention a smartcard is provided for use in a secured client. The smart card comprises a receiver configured for receiving one or more encrypted entitlement control messages. The smart card further comprises a decryptor configured for obtaining a control word from the encrypted entitlement control message. The smart card further comprises a transmitter configured for transmitting the control word to the secured client for decrypting an encrypted content stream. A first set of encrypted entitlement control messages is associated with a first portion of the encrypted content stream and a second set of encrypted entitlement control messages is associated with a second portion of the encrypted content stream. The smart card further comprises a counter configured for increasing a counter value. The counter is configured for increasing the counter value for each processed encrypted entitlement control message in the first set of encrypted entitlement control messages and for ignoring each encrypted entitlement control message in the second set of encrypted entitlement control messages. The smart card further comprises a memory configured for storing a token value. The smart card further comprises an electronic purse module configured for calculating an updated token value using the token value and/or the counter value and configured for updating the token value with the updated token value.

According to an aspect of the invention a method is provided for use in a smart card. The method comprises the step of receiving one or more encrypted entitlement control messages. The method further comprises the step of obtaining a control word from the encrypted entitlement control message. The method further comprises the step of transmitting the control word to a secured client for decrypting an encrypted content stream. A first set of encrypted entitlement control messages is associated with a first portion of the encrypted content stream and a second set of encrypted entitlement control messages is associated with a second portion of the encrypted content stream. The method further comprises the step of increasing a counter value, wherein increasing the counter value for each processed encrypted entitlement control message in the first set of encrypted entitlement control messages and ignoring each encrypted entitlement control message in the second set of encrypted entitlement control messages. The method further comprises the step of storing a token value in a memory of the smart card. The method further comprises the step of calculating an updated token value using the token value and/or the counter value. The method further comprises the step of updating the token value with the updated token value.

Thus the smart card advantageously enables selectively counting the number of encrypted entitlement control messages that have been processed by the smart card, e.g. only those encrypted entitlement control messages associated to the first part of the encrypted content stream containing e.g. advertisement data. The token value stored in memory can be in the same unit as the counter value, i.e. the number of occurrences, but can advantageously be in another unit like e.g. time in seconds or amount of money. In case of using another unit a conversion algorithm is applied when calculating the token value from the counter value. Depending on the conversion algorithm both the token value and the counter value or only the counter value is used when calculating the updated token value. Advantageously the updated token value is stored in memory enabling availability of the actual token value. The token value can advantageously be used as loyalty points.

The embodiment of claim 2 advantageously enables storing a token value, e.g. as loyalty points, in the smart card for processed advertisement data.

The embodiments of claims 3 and 9 advantageously enable the smart card to control decryption of the encrypted entitlement control messages received with the second entitlement data stream, effectively controlling decryption of the second part of the encrypted content stream in the secured client. This enables e.g. conditionally allowing viewing of a television program comprised in the second part of the encrypted content stream only after viewing commercials comprised in the first part of the encrypted content stream for a predefined time period.

The embodiments of claims 4 and 10 advantageously enable the smart card to stop counting when too many encrypted entitlement control messages are received in the predefined time interval, e.g. caused by fast-forwarding a commercial.

The embodiments of claims 5 and 11 advantageously enable the smart card to count an encrypted entitlement control message only the first time it is received. This advantageously prevents double counting in case of e.g. replaying of commercials.

According to an aspect of the invention a secured client is provided for decrypting an encrypted content stream. The secured client comprises a receiver for receiving the encrypted content stream, a first set of encrypted entitlement control messages associated with a first portion of the encrypted content stream and a second set of encrypted entitlement control messages associated with a second portion of the encrypted content stream. The secured client further comprises a smart card having one or more of the above mentioned features. The secured client further comprises a decryptor for decrypting the encrypted content stream.

The embodiment of claim 7 advantageously reduces the number of ECMs that are transmitted from the secured client to the smart card resulting in less ECMs to be processed by the smart card.

According to an aspect of the invention a computer program element is provided which, when being executed by a processor, is adapted to carry out a method for use in a smart card having one or more of the above mentioned features. This advantageously enables the smart card to be implemented partly or as a whole in software.

### BRIEF DESCRIPTION OF THE DRAWINGS

Aspects of the invention will be explained in greater detail by reference to exemplary embodiments shown in the drawings, in which:
Fig.1 shows a simplified architecture for digital broadcasting;
Fig.2 shows a secured client of an exemplary embodiment of the invention;
Fig.3 shows a smart card of an exemplary embodiment of the invention;
Fig.4 shows the steps of a method of an exemplary embodiment of the invention;
Fig.5 shows the steps of a method of an exemplary embodiment of the invention;
Fig.6 shows the steps of a method of an exemplary embodiment of the invention.

### DETAILED DESCRIPTION OF THE DRAWINGS

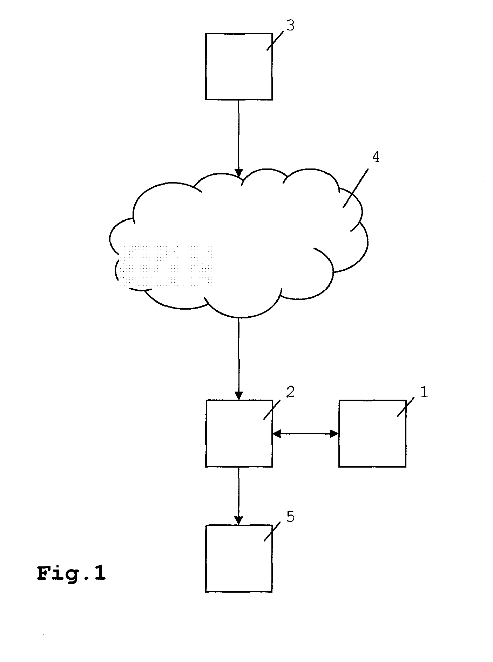

In Fig.1 a simplified architecture is shown of a typical digital video broadcasting environment. A broadcasting server 3 is coupled to a broadcasting network 4, through which digital broadcast signals carrying an encrypted content stream and a stream of encrypted entitlement control messages (ECM) are transmitted to a secured client 2. A smart card 1 is used to decrypt the ECMs to obtain one or more control words (CW), which are used by the secured client 2 to decrypt the encrypted content stream. The decrypted content stream is consumed by and end-user on end-user device 5, which is e.g. a television or video recorder.

Digital broadcast signals typically conform to a standard, e.g. the DVB-H or T-DMB standard for digital terrestrial television for handhelds or the DVB-T standard for terrestrial digital television. Other examples of digital broadcast standards are DVB-C, DVB-S, DVB-T2, DVB-C2, DVB-S2, DVB-SH, Media Flo, S-DMB and MBMS. In DVB-T the content stream is typically a MPEG-2 transport stream. Other standards may use other transport stream protocols.

In the MPEG-2 transport stream, multiple packetized services such as video, video-on-demand, video from network personal video recorder (PVR), audio, television channels, advertisement data and other data such as electronic service guides (ESG) are multiplexed. The stream of encrypted ECMs is typically also multiplexed in the MPEG-2 transport stream. In the MPEG-2 standard services are referred to as programs. A single television channel may comprise multiple audio, video and possibly data streams such as subtitles data. Data packets associated with a particular program are identified by a packet identifier (PID) in the MPEG-2 transport stream and form a portion of the content stream.

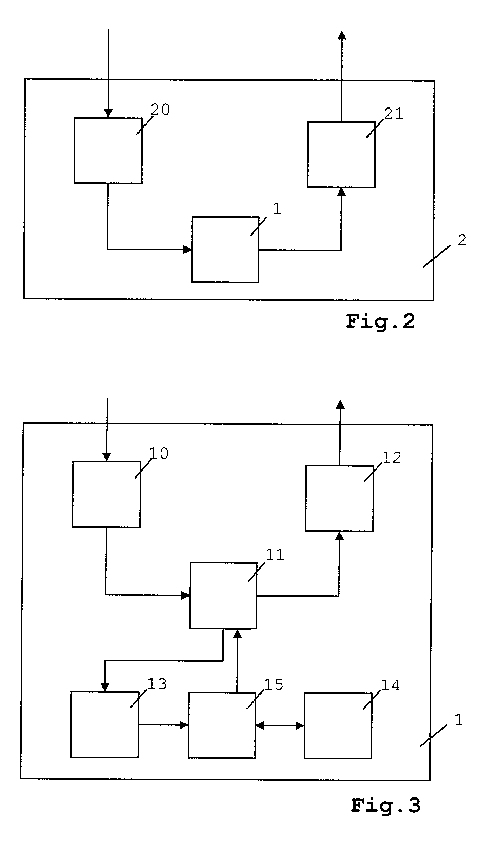

In Fig.2 a secured client 2 is shown. The secured client 2 receives the MPEG-2 transport stream in receiver 20. From the MPEG-2 transport stream encrypted ECMs are demultiplexed and transmitted to the smart card 1. The smart card 1 decrypts the ECMs and CWs obtained from the decrypted ECMs are transmitted from the smart card 1 to the decoder 21 of the secure client 2. The CWs are used by the decoder 21 to decrypt a portion of the content stream associated to the CWs.

In Fig.2 the smart card 1 is integrated into the secured client 2. The smart card can be implemented in hardware, but can also be implemented in software or a mixture of hardware and software. Alternatively the smart card 1 is external to the secured client 2. The secured client 2 is then equipped with a smart card reader, e.g. in the form of a PCMCIA slot wherein a PCMCIA smart card is to be inserted for decrypting the ECMs.

The smart card 1 as shown in Fig.3 receives encrypted ECMs in receiver 10 from the secured client 2. Decryptor 11 decrypts the ECMs to obtain CWs needed by the secured client 2 to decrypt the content stream. The CWs are transmitted to the secured client 2 by transmitted 12.

A portion of the content stream is associated with a set of encrypted ECMs. CWs obtained from the set of encrypted ECMs are used by the secured client to decrypt the portion of the content stream. It is possible that multiple portions of the content stream are associated with the same set of encrypted ECMs. An ECM packet has a header with an ECM_id field identifying the set of the ECM. Optionally the ECM header also has a new-content-flag that is changed in the broadcasting server (e.g. flips between binary 0 and binary 1) when the payload of the ECM changes. Optionally the ECM header also has an ECM-counter-field that contains a cyclic counter that is increased by the broadcasting server up to a maximum value each time the payload of the ECM changes. When the maximum value is reached the counter is set to zero and counting continues from zero. Optionally the ECM header also has a timestamp field that is set by the broadcasting server with a timestamp.

ECMs that are processed by the smart card 1, e.g. ECMs that are decrypted in the smart card 1 or ECMs that are transmitted from the smart card 1 to the secured client 2, are counted by counter 13. The counter increases a counter value for ECMs with a certain ECM_id thus belonging to a certain set of ECMs associated with a portion of the content stream. Which ECM_id is to be taken into account for counting can be configured in various manners, e.g. through management messages received via receiver 10. ECMs with a predefined ECM_id are counted in counter 13 by increasing a counter value for each ECM with the predefined ECM_id. The counter is optionally configured to increases the counter value only when the new-content-flag changes. The counter is optionally configured to increase the counter value only when the ECM-counter-field changes. The counter is optionally configured to increase the counter value only when the timestamp field changes.

When the smart card 1 is integrated in secured module 2 as shown in Fig.2, the encrypted ECMs may be filtered by the secured module 2 prior to transmitting the ECMs to the smart card 1. Only ECMs with the predefined ECM_id are then transmitted to the smart card 1 and the smart card 1 can simply count all ECMs it receives, possibly taking into account the new-content-flag, ECM-counter-field and/or the timestamp field. Which ECM_id is to be filtered can be configured in various manners, e.g. through management messages received via receiver 20.

The smart card as shown in Fig.3 has an electronic purse module 15 for storing a token value in memory 14. The token value is a representation of the counter value and can be equal to the counter value. An updated token value is calculated by the electronic purse module 15 using the token value currently stored in memory 14 and/or the counter value. The token value stored in memory can be the same or in the same unit as the counter value, i.e. the number of occurrences, but can advantageously be in another unit like e.g. time in seconds or amount of money. Depending on the conversion algorithm both the token value and the counter value or only the counter value is used when calculating the updated token value. As an example the token value stored in memory is 25, indicative of a monetary amount of EUR 25. A counter value of 1 is defined to be worth EUR 0,10. When the counter value is increased to 260, the new token value is calculated as 260 x 0,10 = 26. The token value stored in memory 14 is subsequently updated with a value of 26.

The invention can advantageously be used to count ECMs associated with an advertisement data portion of the content stream. The number of ECMs counted for advertisement data gives an indication of the amount of advertisements an end-user watched on the television 5. The longer an end-user watches advertisements, the more ECMs are counted, which is reflected in the token value stored by the electronic purse 15 in the memory 14. The token value can be used as loyalty points earned by watching advertisements.

The electronic payment module 15 is optionally configured to control decryptor 11 by analysing the value of the token value stored in memory 14 and sending a signal to decryptor 14 when the token value is below or above a predefined threshold. Whether to apply the 'above a predefined threshold'-rule or 'below a predefined threshold'-rule depends on the conversion algorithm used for calculating the token value. I.e., depending on the conversion algorithm used, a low token value may correspond to a high or to a low number of counted ECMs. When receiver 10 received e.g. a set of ECMs associated to advertisement data and a set of ECMs associated to a television program, the decryptor 11 decrypts ECMs from the set of ECMs associated to the television program only when allowed by the electronic purse 15, i.e. only when the end-user watched the advertisements. In case the end-user did not watch enough advertisements, the CWs for decrypting the television portion of the content stream cannot be decrypted by the secured device, resulting in the end-user being unable to watch the television program.

The counter 13 is optionally configured to count the number of processed ECMs in a predefined time interval. The counter value is increased only when the number of ECMs in the time interval is below a predefined threshold. A typical ECM rate is somewhere in-between 1 ECM / 10 seconds and 1 ECM /250 milliseconds. A higher ECM rate is an indication of fast forwarding advertisements. By taking into account the number of ECMs in the time interval, it is prevented that the counter value is increased during fast forwarding and loyalty point are earned.

The counter 13 is optionally configured to increase the counter value only once for each ECM processed. Hereto the timestamp field in the header of the ECM packet is checked and only if the ECM with the timestamp has not been processed before, the counter value is increased. To keep track of which ECMs have been processed, the smart card 1 stores received timestamps and ECM_id in a memory not shown in Fig.3. Only a limit number of timestamps can be stored because of memory restrictions. When the memory is full the oldest timestamp is overwritten by the latest timestamp.

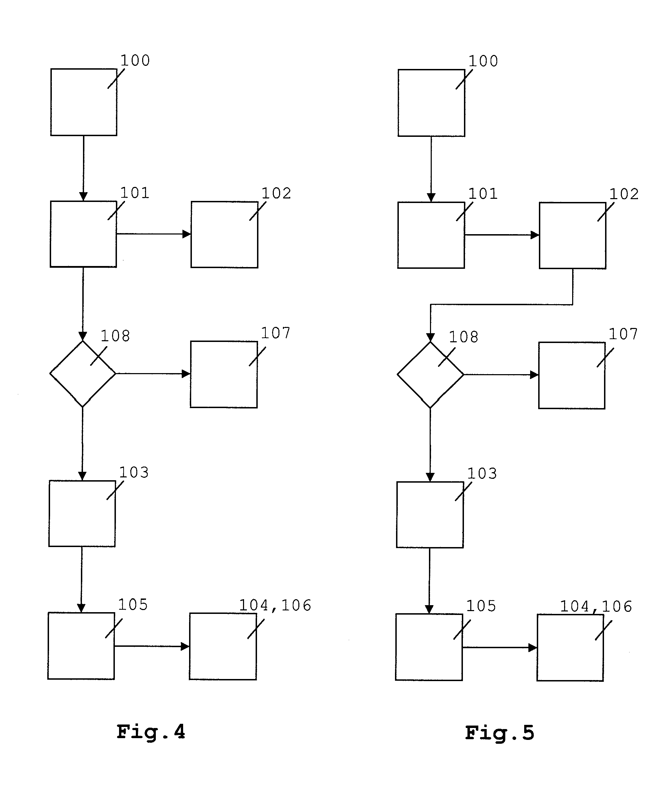

In Fig.4 an embodiment of a method for use in a smart card 1 of the invention is shown. Smart card 1 receives ECMs in step 100. By decrypting the ECMs, CWs are obtained in step 101. The CWs are transmitted to the secured client 2 in step 102. Processed ECMs from a first set of encrypted ECMs associated with a first portion of the content stream containing e.g. advertisements are counted in step 103. ECMs are defined to be processed when they are decrypted in step 101. Alternatively, as shown in Fig.5, ECMs are defined to be processed when they are transmitted to the secured device in step 102. ECMs in other sets associated to other portions of the content stream are ignored. In step 108 it is established whether or not the ECMs are in the first set. If so, the counter value is increased in step 103. If not, the ECM is ignored and it is not counted. From the counter value and/or a token value stored in memory 14 an updated token value is calculated in step 105. The token value is updated with the updated token value in step 106.

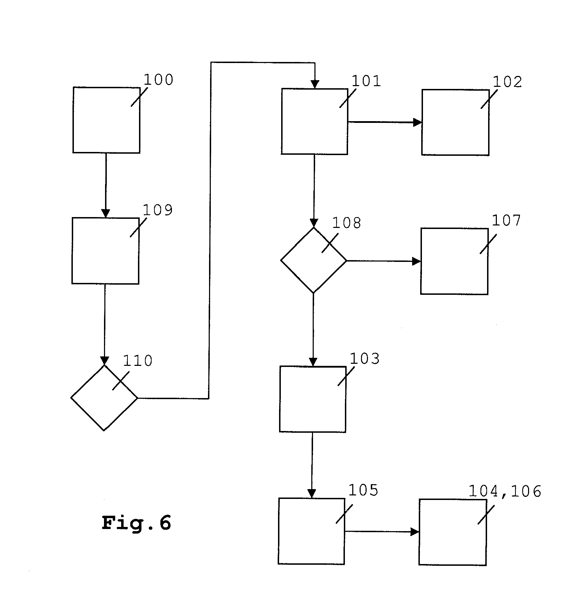

In Fig.6 the method as shown in Fig.4 and Fig.5 is expanded with steps 109 and 110. The token value is read from memory 14 in step 109. In step 110 it is conditionally allowed that CWs from a second set of encrypted entitlement control messages are obtained in step 101 and transmitted to the secured client in step 102. If not allowed, the CWs are not obtained and a second portion of the content stream, e.g. a television program, cannot be decrypted in the secured client.

While the invention has been illustrated and described in detail in the drawings and foregoing description, such illustration and description are to be considered illustrative or exemplary and not restrictive; the invention is not limited to the disclosed embodiments. It is e.g. possible to count processed ECMs for multiple portions of the encrypted content stream. Other variations to the disclosed embodiments can be understood and effected by those skilled in the art in practicing the claimed invention, from appropriate consideration of the drawings, the disclosure, and the appended claims.

## Claims

1. A smart card (1) for use in a secured client (2), comprising:
a receiver (10) configured for receiving one or more encrypted entitlement control messages;
a decryptor (11) configured for obtaining a control word from the encrypted entitlement control message;
a transmitter (12) configured for transmitting the control word to the secured client (2) for decrypting an encrypted content stream;
a counter (13) configured for increasing a counter value;
a memory (14) configured for storing a token value; and
an electronic purse module (15) configured for calculating an updated token value using the token value and/or the counter value and configured for updating the token value with the updated token value,
wherein
a first set of encrypted entitlement control messages is associated with a first portion of the encrypted content stream and a second set of encrypted entitlement control messages is associated with a second portion of the encrypted content stream, and
the counter (13) is configured for increasing the counter value for each processed encrypted entitlement control message in the first set of encrypted entitlement control messages and for ignoring each encrypted entitlement control message in the second set of encrypted entitlement control messages.

2. The smart card (1) according to claim 1, wherein the first portion of the encrypted content stream comprises advertisement data.

3. The smart card (1) according to any of the preceding claims, wherein the electronic purse module (15) is further configured for reading the token value from the memory (14) and conditionally allowing the decryptor (11) to obtain the control word from the encrypted entitlement control message in the second set of entitlement control messages depending on the token value.

4. The smart card (1) according to any of the preceding claims, wherein the counter (13) is further configured for counting the number of encrypted entitlement control messages processed in a predefined time interval and wherein the counter (13) is configured for increasing the counter value if the number of encrypted entitlement control messages processed in the predefined time interval is below a predefined threshold value.

5. The smart card (1) according to any of the preceding claims, wherein the encrypted entitlement control message comprises a timestamp and wherein the counter is further configured for checking the timestamp and increase the counter value only the first time the encrypted control message is processed.

6. A secured client (2) for decrypting an encrypted content stream, comprising:
a receiver (20) for receiving the encrypted content stream, a first set of encrypted entitlement control messages associated with a first portion of the encrypted content stream and a second set of encrypted entitlement control messages associated with a second portion of the encrypted content stream,
a decryptor (21) for decrypting the encrypted content stream; and
a smart card (1) according to any of the claims 1-5.

7. Secure client (2) according to claim 6, further comprising a filter for filtering the first set of encrypted entitlement control messages, and wherein the smart card (1) receives only the first set of encrypted entitlement control messages.

8. A method for use in a smart card, comprising the steps of:
receiving (100) one or more encrypted entitlement control messages;
obtaining (101) a control word from the encrypted entitlement control message;
transmitting (102) the control word to a secured client for decrypting an encrypted content stream;
increasing (103) a counter value;
storing (104) a token value in a memory of the smart card;
calculating (105) an updated token value using the token value and/or the counter value; and
updating (106) the token value with the updated token value,
wherein
a first set of encrypted entitlement control messages is associated with a first portion of the encrypted content stream and a second set of encrypted entitlement control messages is associated with a second portion of the encrypted content stream, and
increasing (103) the counter value for each processed encrypted entitlement control message in the first set of encrypted entitlement control messages and ignoring (107) each encrypted entitlement control message in the second set of encrypted entitlement control messages.

9. The method according to claim 8, further comprising the steps of reading the token value from the memory and conditionally allowing obtainment of the control word from the encrypted entitlement control message in the second set of entitlement control messages depending on the token value.

10. The method according to any of the claims 8-9, further comprising the steps of counting the number of encrypted entitlement control messages received in a predefined time interval and increasing the counter value if the number of encrypted entitlement control messages processed in the predefined time interval is below a predefined threshold value.

11. The method according to any of the claims 8-10, wherein the encrypted entitlement control message comprises a timestamp, the method further comprising the steps of checking the timestamp and increasing the counter value only the first time the encrypted control message is received.

12. A computer program element, which, when being executed by a processor, is adapted to carry out a method for use in a smart card according to any of the claims 8-11.
